# EUROPEAN PATENT APPLICATION

(11) **EP 2 112 771 A1**
(43) Date of publication of application: **28.10.2009**
(21) Application number: 08290336.0
(22) Date of filing: 07.04.2008
(51) Int. Cl.: H04B 7/04, H04L 1/00

(54) **Adaptive MIMO mode selection method and apparatus thereof**

(71) Applicant: Alcatel Lucent, 75008 Paris (FR)
(72) Inventor: Hoek, Cornelis, 71732 Tamm (DE); Wild, Thorsten, 70435 Stuttgart (DE)
(74) Representative: Schmidt, Werner Karl

(57) **Abstract**

The invention relates to a method of MIMO mode selection in a network element of a mobile communication system, the mobile communication system further comprising a mobile station coupled to a base station, the base station adapted for transmission to a cell, the method comprising the steps of: obtaining a channel estimation of the mobile station and calculating an estimated signal to interference plus noise ratio (SINR) with the channel estimation of the mobile station; selecting as MIMO mode candidates a first set of MIMO modes, if the estimated SINR is smaller than a first threshold; selecting as MIMO mode candidates a second set of MIMO modes, if the estimated SINR is bigger than the first threshold; calculating a cell load value of the cell of the base station adapted for transmission; obtaining a corresponding weight factor of load value for each MIMO mode of the MIMO mode candidates; obtaining an expected mobile station throughput for each MIMO mode candidate and calculating a weighted throughput by multiplying the weight factor of each MIMO mode by the expected mobile station throughput; and selecting the MIMO mode with a highest weighted throughput for communication between the mobile station and a base station.

## Description

### Technical field

The invention relates to a method of adaptive MIMO mode selection in a network element, to a network element and to a computer program product.

### Background and related art

In radio technologies, multiple input and multiple output or MIMO defines the use of multiple antennas at the transmitter and receiver in order to improve the communication performance. Further, it increases the data throughput and link range without additional bandwidth or transmit power. One of the main functions of MIMO is the spatial multiplexing that allows transmitting multiple independent spatial data streams. Each data stream is transmitted from a different transmit antenna in the same time-frequency resource or with a different set of weights applied to the multiple transmit antennas. A MIMO channel can be modeled as having several transmit streams to go through a matrix channel consisting of multiple paths between multiple transmit antennas at the transmitter and multiple receive antennas at the receiver. The receiver gets the signals by multiple receiver antennas and decodes the received signal vectors into the original information. In case of pre-coding an equivalent effective MIMO channel is the matrix product of the transmission precoding matrix and the MIMO channel matrix.

There are several types of MIMO transmit schemes. Some of them are: Single-user MIMO, Multiple-user MIMO, Spatial Interference Coordination and Collaborative MIMO. Collaborative MIMO allows a group of base stations to transmit to at least a wireless terminal in a same band and time, even if each base station has a single antenna. By sharing the resources between two or more base stations, the sum throughput resulting from using multiple transmitters is incremented. Typically for the downlink, or transmission from a base station to a wireless terminal, the group of base stations forms a collaborative MIMO domain. There is therefore a need for data synchronization in an OFDMA system with collaborative MIMO capability and for spatial interference coordination.

### Summary

The invention relates to a method of MIMO mode selection in a network element of a mobile communication system, the mobile communication system further comprising a mobile station coupled to a base station, the base station adapted for transmission to one or to multiple cells or sectors, the method comprising the steps of:
- obtaining a channel estimation of the mobile station and calculating an estimated signal to interference plus noise ratio (SINR) with the channel estimation of the mobile station;
- selecting as MIMO mode candidates a first set of MIMO modes, if the estimated SINR is smaller than a first threshold;
- selecting as MIMO mode candidates a second set of MIMO modes, if the estimated SINR is bigger than the first threshold;
- calculating a cell load value of the cell of the base station adapted for transmission;
- obtaining a corresponding weight factor deduced from the load value for each MIMO mode of the MIMO mode candidates;
- obtaining an expected mobile station throughput and calculating a weighted throughput by multiplying the weight factor of each MIMO mode by the expected mobile station throughput;
- selecting the MIMO mode with a highest weighted throughput for communication between the mobile station and one or multiple base stations;
   wherein the mobile communication system is a linear pre-coding system and is adapted for linear pre-coding using transmission antenna weights.

The advantage of the embodiments is that the network element can autonomously switch between the different MIMO modes in order to select the optimal mode according to the performance metric. Depending on the measured SINR, the network element selects a set of candidate MIMO modes that are expected to perform well under that SINR level. The calculation of the performance metrics with programmable weight function allows the mobile station deciding which MIMO mode performs best. The change in the weight factor allows the base station to react to the load of the cell and change the performance metric from a peak throughput of the mobile station (for a low cell load) to spectral efficiency (for a high cell load)

Single-user MIMO (SU-MIMO) means that for a given (e.g. time-frequency) resource element a certain amount of spatial data streams (K_SU) are transmitted to one user. K_SU depends on channel conditions and the SINR. If this number is larger than one, it means that a combination of spatial multiplexing and linear precoding is used. K_SU equal to one means using only linear precoding. For both values, optionally additional space time/frequency block coding can be used.

Multiple-user (MU-MIMO) means that for a given (e.g. time-frequency) resource element, a certain amount of spatial data streams (K_MU) are transmitted to multiple users. K_MU depends on channel conditions and the SINR. If the K_MU is larger than one, then a combination of SDMA and linear precoding is used. Optionally, additional space time/frequency block coding can be further used. K_MU equal to one is equivalent to the case of K_SU equal to one, so that for that case SU-MIMO and MU-MIMO are identical.

Spatial interference avoidance means that for a given resource element the serving sector uses one data stream with a certain linear precoding. This can also be extended to more than one stream, using either SU-MIMO or MU-MIMO. Neighbour sectors and/or sites which cause significant interference for certain weight vectors (signalled by codebook indexes and can be interpreted as beams) will be informed by the mobile station to the base station, via signalling, not to use those most interfering transmit weights on this resource element.

For a given user, the throughput is the amount of successfully transmitted information bits per second. Cell throughput is the time-averaged sum throughput of all users of a certain cell, averaged over all cells. Peak throughput is the maximum achievable throughput of a certain user. Cell border throughput is the throughput for users in bad SINR conditions.

In an embodiment, the expected mobile station throughput is a function of the SINR, modulation and coding scheme of the mobile station. The first set of MIMO modes are: CO-MIMO and Interference Coordination Mode, the second set of MIMO modes are SU-MIMO, MU-MIMO and Interference Coordination Mode. The network element is a mobile station or a base station.

In another embodiment, a weight factor close to one corresponds to a small cell load value and it maximizes the throughput of the mobile station. The base station communicates with the mobile station with a plurality of codebooks, wherein the codebooks are a set of complex weight vectors for transmission antennas of the base station. The correspondence between the weight factor and the cell load values are stored in a look-up table in the network element, wherein the cell load value is a value of a plurality of base stations. The weight factor using one divided by the amount of consumed resources maximizes the average cell throughput.

In another aspect, the invention relates to a network element for a mobile communication system, being operable to perform in accordance with any one of the preceding embodiments. In an embodiment, the network element is a mobile station. In another embodiment, the network element is a base station.

In another aspect, the invention relates to a mobile communication system for MIMO mode selection, the mobile communication system being operable to perform in accordance with any one of the preceding embodiments.

In another aspect, the invention relates to a computer program product stored on a storage medium, comprising executable program means for causing a network element to perform a method according to any of the preceding embodiments when the program is run on the network element.

### Brief description of the drawings

In the following preferred embodiments of the invention will be described in greater detail by way of example only making reference to the drawings in which:
- Figure 1: shows an example of a method of MIMO mode selection,
- Figure 2: shows an example of the SU-MIMO mode,
- Figure 3: shows another example of an MU-MIMO mode,
- Figure 4: shows another example of spatial inter-cell interference coordination mode,
- Figure 5: shows an example of the collaborative MIMO mode,
- Figure 6: shows a wireless communication system according to an embodiment.

### Detailed description

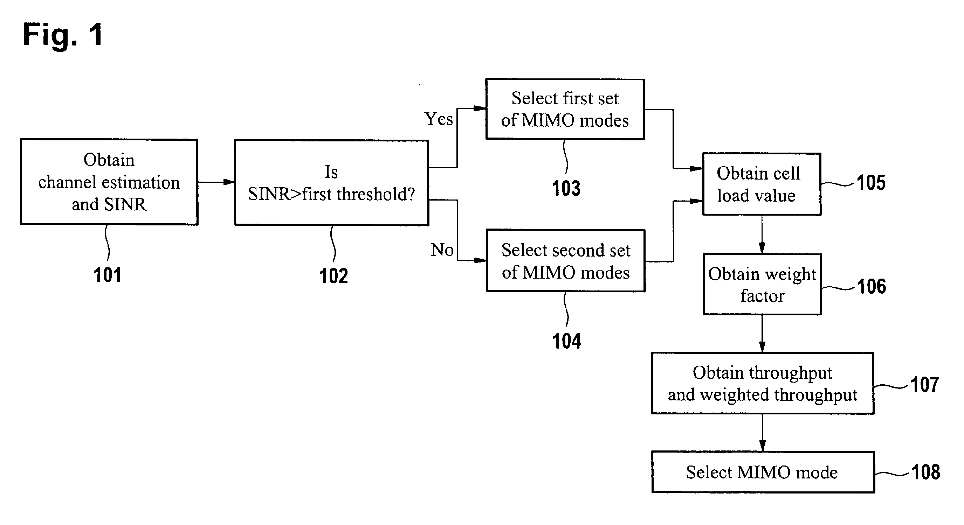

Fig. 1 shows a method of MIMO mode selection in a network element. The method comprises a first step 101 that obtains channel estimation of the mobile station that is communicating with the base station and calculates a signal to interference plus noise ratio (SINR) using as an input parameter the channel estimation of the mobile station. On a second step 102 the method selects a set of MIMO mode candidates depending on the value of the SINR. If the SINR is smaller than a first threshold, a third step 103 selects a first set of MIMO modes. Otherwise, if the SINR is bigger than the first threshold, a fourth step 104 selects a second set of MIMO modes as the candidates.

The cell load value is calculated by the base station and reported to the mobile stations in regular time intervals. The cell load value is stored in a mobile memory and is used after the candidates for MIMO modes are selected. The cell load values are given for the specific cell to which the mobile station is associated and for the combination of cells that can be used in the multi-cell MIMO modes. As some MIMO modes require the transmission from more than one base station to the mobile station, the calculated cell load value may correspond to all the candidate base stations. On a sixth step 106, a corresponding weight factor of each calculated cell load for each MIMO mode candidate is obtained. The correspondence may be obtained, for example, by using a database that contains the corresponding weight factor for each cell load value. Alternatively, it could also be obtained from a function of the cell load value. The network element may contain more than one database or lookup table, at least one table for the cell load representing one base station and one o more tables for cell loads of a plurality of base stations.

After the weight factor for each load value of the cell has been obtained, a seventh step 107 obtains an expected mobile station throughput and also calculates a weighted throughput by multiplying the corresponding weight factor of each mode by the expected mobile station throughput. When all the weighted throughput of each MIMO mode is obtained, the resulted values are compared. Then, the highest weighted throughput and the corresponding MIMO mode of this highest weighted throughput is selected for communication between the mobile station and the base station. The mobile communication system is a linear pre-coding system and is adapted for linear pre-coding for transmit antenna weights.

The first set of MIMO modes may correspond to collaborative MIMO and to interference coordination mode. The second set of MIMO modes corresponds to single-user MIMO, multiple-user MIMO, and interference coordination mode. In general, a small cell load value may correspond to a weight factor close to one, with the outcome of maximizing the throughput of the mobile station. The base station communicates with the mobile station with a plurality of codebooks. A codebook is a small set of allowed complex weight factors that are applied to the transmission antennas of the base stations. A codebook index selects the optimal weight vector from the codebook. The codebook may vary for different MIMO modes and for different antenna configurations, as for example number of antennas, spacing, polarization mix and calibration. The correspondence between the weight factor and the cell load values may be stored in a lookup table in the network element. The method described may be located in the mobile station or alternatively in the base station.

The weight factors for the at least four different MIMO modes can be changed by the base station or the mobile station in order to adapt the changes of load situations or to optimize the cell edge throughput. The selection of different weight factors, that are inverse proportional to the resource use of the different modes, optimize the spatial efficiency. These results in a more frequent selection of MIMO modes as spatial interference coordination and the multiple-user MIMO modes, which use fewer resources compared to another MIMO modes.

For simplification of the description, in the following figures the different codebook entries are illustrated as beams pointing to different locations. This corresponds to the use of a calibrated linear array with low spacing. Alternative antenna configurations may include the selection of the weight vector under certain spatial and polarization characteristics.

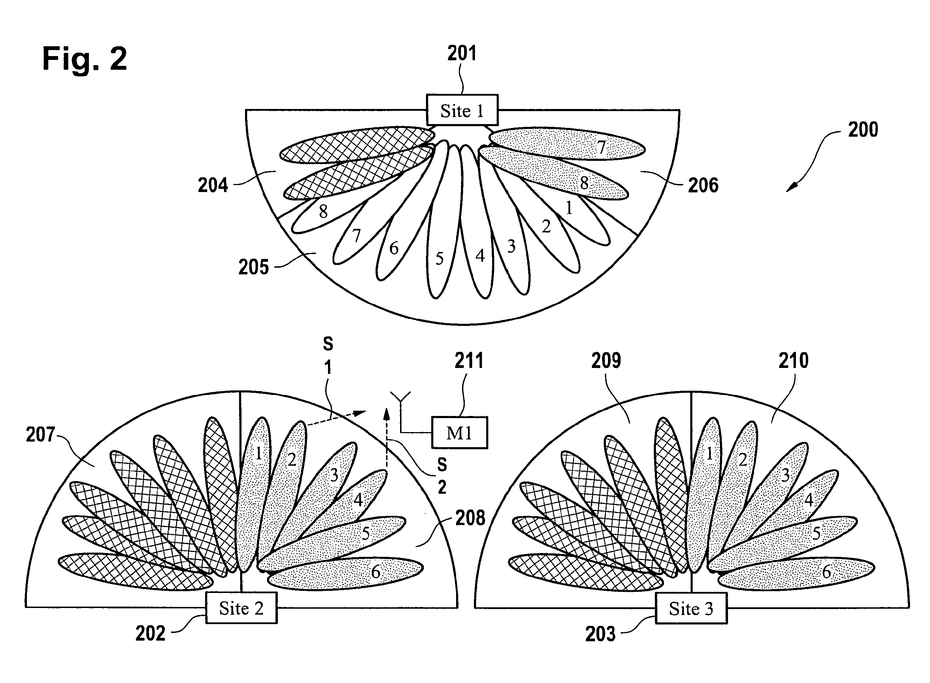

Fig. 2 shows a wireless communication system 200 using the Single-user MIMO (SU-MIMO) mode, the wireless communication 200 comprising a first site 201, a second site 202 and a third site 203. The first site 201 is divided in three sectors 204-206; the second site 202 is divided in three sectors, with sectors 207 and 208 included in the figure. The third site 203 is also divided in three sectors, with sectors 209 and 210 included in the figure.

If a mobile station 211 is close to the site 202 and the communication between a site and the mobile station presents low interference from neighbor cells resulting in a high signal to interference noise ratio, then the single-user MIMO mode may be selected to communicate between the site and the mobile station. The weight factor is close to one and more or less independent from the load as SU-MIMO does not consume fractions or multiples of resources. According to the example in fig. 2, the mobile station 211 reports that the codebook entries of the beams 2 and 4 result in the best single-user MIMO throughput, so that the scheduler assigns these two beams 2 and 4 for use in the single-user MIMO mode.

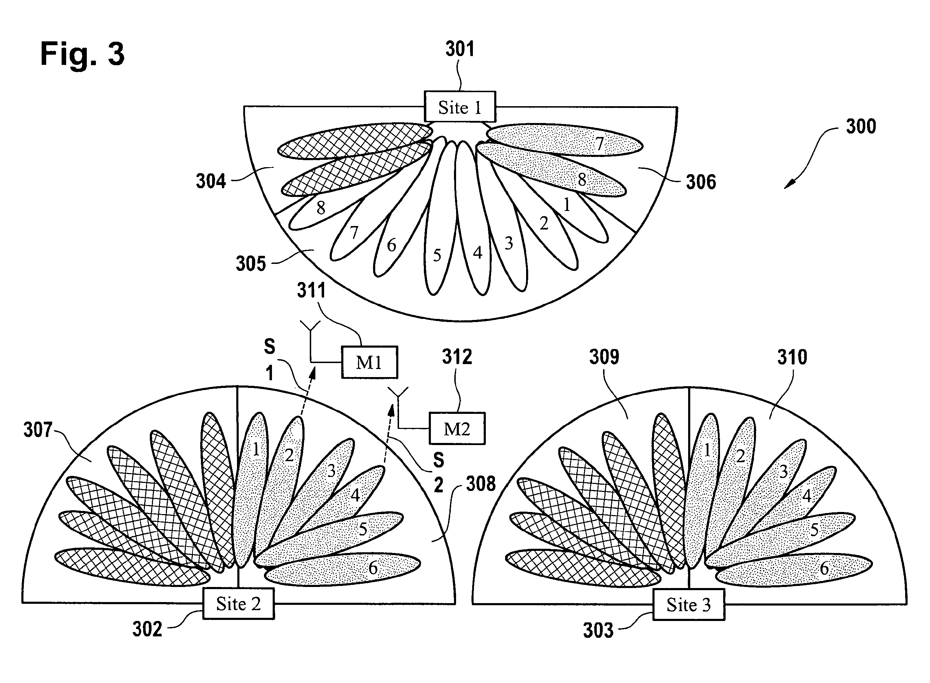

Fig. 3 shows a wireless communication system 300 with three sites 301-303, the site 301 comprising three sectors 304-306. The site 302 further comprises three sectors, with two sectors 307 and 308 shown in the figure. The site 303 comprises three sectors, with two sectors 309 and 310 shown in the figure.
The wireless communication system further comprises two mobile stations 311 and 312 that are communicating with the site 302.

If both mobile stations 311 and 312 are close to the serving cell of the site 302 and have low interference from neighbor sites 301 and 303, the resulting high SINR makes it adaptable for single-user or multiple-user MIMO modes. According to the cell load value of the site 302, the weight factor is chosen in order to optimize the mean mobile station throughput or the peak mobile throughput, by sharing the resources with multiple spatial streams. As a result of the chosen weight factor, the multiple-user MIMO mode obtains the highest weighted throughput by using the reported preferred codebook indexes of the mobile stations.

The mobile station 311 further reports to the base station or site 302 that the beam 2 in combination with the beams 4, 5 or 6 in the sector 308 results in good SINR. The mobile station 312 reports to the site that the use of the beam 4, in combination with the beams 1, 2 or 8 in the sector 308, results in good SINR or signal to interference noise ratio. As a consequence of these reports, the scheduler assigns beams 2 and 4 to the mobile station 311 and to mobile station 312 for use in multiple-user MIMO mode. Alternatively a combination of the MU-MIMO mode and the spatial inter-cell interference coordination may be also possible.

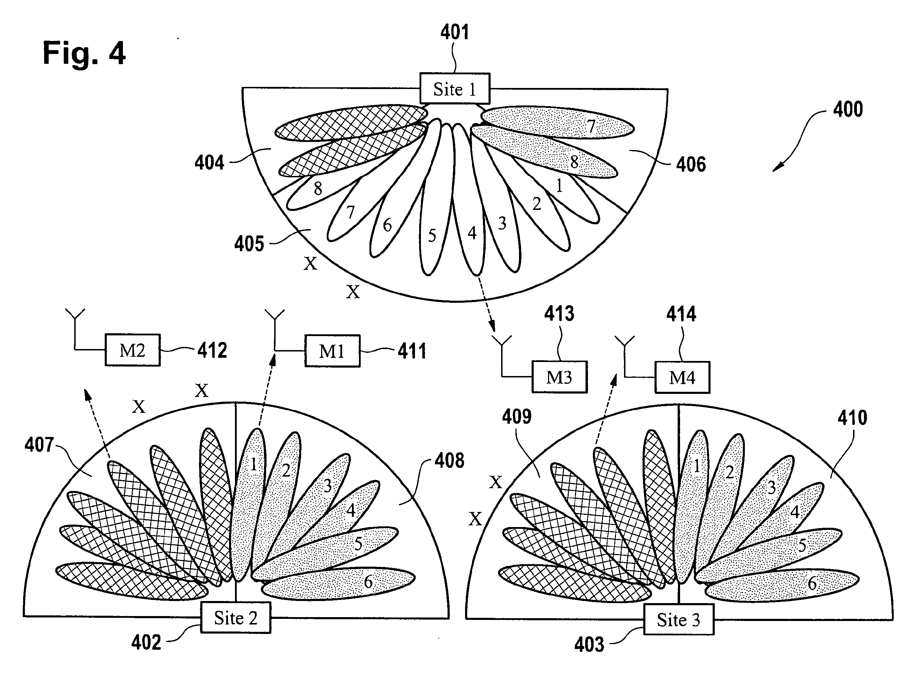

Fig. 4 shows a diagram of a wireless communication system 400 comprising three sites 401-403; site 1 including three sectors 404-406; site 402 comprising three sectors, with sectors 407 and 408 shown in the figure. Site 403 comprising another three sectors, with sectors 409 and 410 shown in the figure. The wireless communication system 400 also includes four mobile stations 411-414.

In the wireless communication system 400 there is significant amount of interference between the three different sites and the cells that cover the area transmitted by the sites, so that the SINR is not sufficient for MIMO modes as single-user or multiple-user MIMO. Therefore, the spatial inter-cell interference coordination mode is the best mode for this scenario. This selection is achieved if the weighted throughput of the MIMO mode is the maximum compared to weighted throughputs of the other candidate modes. Under the system 400, each of the mobile stations 411-414 reports the beam index or codebook entry from the cells that transmit the beams that result in the optimal SINR.

The mobile stations 411-414 may also give information about the spatial interference from neighbor cells, so that a list of codebook indexes of neighbor cells that create the most interference can be obtained. In this example of fig. 4, the mobile station 411 reports that the best beam is beam 1 from the sector 408 of the site 402 and requests to "block" the beams 6 and 7 of the sector 405 of the site 401 and the beams 7 and 8 of the sector 407 of the site 402. The mobile station 411 also requests to "block" the beams 4 and 5 of the sector 409 of the site 403 in order to achieve the highest SINR. To "block" beams means that for a given resource this codebook index is not used. The scheduler gets the best beam as requested by the mobile station and block the beams as informed by the mobile station 411, as well as it optimizes the beam assignments to other mobile stations 412-414.

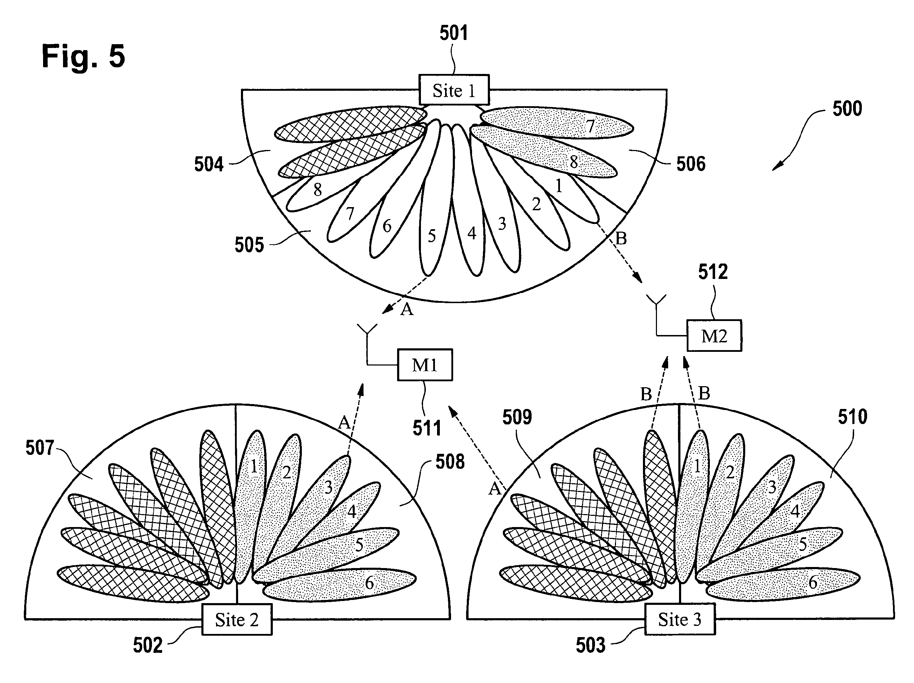

Fig. 5 shows a wireless communication system 500 comprising three sites 501-503, the site 501 including three sectors 504-506, the site 502 comprising three sectors, with sectors 507 and 508 shown in the figure. Site 503 comprising three sectors, with two sectors 509 and 510 shown in the figure. The wireless system further comprises two mobile stations 511 and 512.

In the example of fig. 5, the wireless communication system 500 receives very high interference from neighbor cells for the communication between the mobile stations 511, 512 to any of the sites 501-503. Therefore, the SINR is not high enough to use the single-user or multiple-user MIMO modes, or even for the spatial interference coordination. The data is transmitted from multiple sites to the mobile in using a technique known as collaborative MIMO. Additional space time frequency block coding or other transmission diversity modes can also be used for these situations on top of the linear pre-coding. The weight of one can be used for optimizing the mobile station peak throughput. Alternatively a weight equal to one divided by the number of collaborating sites can be used for optimizing the mean mobile station throughput, where the resources in multiple cells are used.

Every mobile station 511 and 512 reports the beam index or codebook entries of their corresponding cells that results on having the best SINR. Every mobile station gives also information about the neighbor cells and the corresponding codebook entries that may improve the SINR. In the example of fig. 5, the mobile station 511 reports to the site 2 502 that the best beam is beam number 3 from the sector 508 and requests transmission also from beam 5 of sector 509 from the site 503. The mobile station also requests to the site 501 to use the beam number 5 of the sector 505 in order to improve the overall SINR. All the sites 501-503 are synchronized in order to transmit simultaneously the frames from the selected beams to the mobile station 511. A similar process is repeated for mobile station 512.

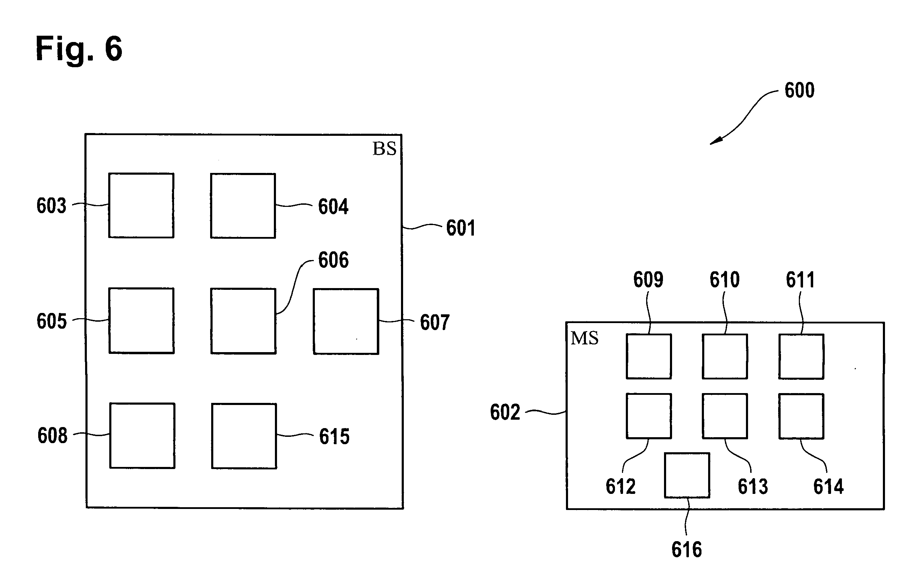

Fig. 6 shows a wireless communication system 600 with two different network elements 601 and 602, where the network element 601 corresponds to a base station and the network element 602 corresponds to a mobile station. The base station 601 comprises means for 603 obtaining a channel estimation of the mobile station and calculating an estimated SINR with the channel estimation of the mobile station; means for 604 selecting as MIMO mode candidates a first set of MIMO modes if the SINRs are smaller than a first threshold or selecting a second set of MIMO modes if the SINR is bigger than the first threshold.

The base station further comprises means for 605 calculating a cell load value of the cell of which the base station is adapted for transmission; means for 606 obtaining a corresponding weight factor of the load value for each MIMO mode of the MIMO mode candidates; means for 607 obtaining an expected mobile station throughput and calculating a weighted throughput by multiplying the weight factor of each MIMO mode by the expected mobile station throughput; and means for 608 selecting the MIMO mode with the highest weight of throughputs for communication between the mobile station and a base station. The base station also includes a computer program product 615

Alternatively the same components of the base station 601 can also be found on the mobile station 602 with the means for 609 obtaining a channel estimation of the mobile station 602 and calculating an estimated signal to interference plus noise ratio with the channel estimation; means for 610 selecting as MIMO mode candidates a first set of MIMO modes if the SINR is smaller than a first threshold or a second set of MIMO modes if the SINR is bigger than the first threshold; means for 611 calculating a cell load value of the cell where the mobile station 602 is located; means for 612 obtaining a corresponding weight factor of the cell load value for each MIMO mode; means for 613 obtaining an expected mobile station throughput and calculating a weighted throughput by the mobile station 602; and means for 614 selecting the MIMO mode with the highest weighted throughput for communication between the mobile station 602 and any base station. The mobile station also includes a computer program product 616.

**List of Reference Numerals**

| | |
|---|---|
| 101 | First step |
| 102 | Second step |
| 103 | Third step |
| 104 | Fourth step |
| 105 | Fifth step |
| 106 | Sixth step |
| 107 | Seventh step |
| 108 | Eighth step |
| 200 | Wireless communication system |
| 201 | Site 1 |
| 202 | Site 2 |
| 203 | Site 3 |
| 204 | First sector |
| 205 | Second sector |
| 206 | Third sector |
| 207 | First sector |
| 208 | Second sector |
| 209 | First sector |
| 210 | Second sector |
| 211 | Mobile station |
| 300 | Wireless communication system |
| 301 | Site 1 |
| 302 | Site 2 |
| 303 | Site 3 |
| 304 | First sector |
| 305 | Second sector |
| 306 | Third sector |
| 307 | First sector |
| 308 | Second sector |
| 309 | First sector |
| 310 | Second sector |
| 311 | First mobile station |
| 312 | Second mobile station |
| 400 | Wireless communication system |
| 401 | Site 1 |
| 402 | Site 2 |
| 403 | Site 3 |
| 404 | First sector |
| 405 | Second sector |
| 406 | Third sector |
| 407 | First sector |
| 408 | Second sector |
| 409 | First sector |
| 410 | Second sector |
| 411 | First mobile station |
| 412 | Second mobile station |
| 413 | Third mobile station |
| 414 | Fourth mobile station |
| 500 | Wireless communication system |
| 501 | Site 1 |
| 502 | Site 2 |
| 503 | Site 3 |
| 504 | First sector |
| 505 | Second sector |
| 506 | Third sector |
| 507 | First sector |
| 508 | Second sector |
| 509 | First sector |
| 510 | Second sector |
| 511 | First mobile station |
| 512 | Second mobile station |
| 600 | Wireless communication system |
| 601 | Base station |
| 602 | Mobile station |
| 603 | Means for obtaining |
| 604 | Means for selecting |
| 605 | Means for calculating |
| 606 | Means for obtaining |
| 607 | Means for obtaining |
| 608 | Means for selecting |
| 609 | Means for obtaining |
| 610 | Means for selecting |
| 611 | Means for calculating |
| 612 | Means for obtaining |
| 613 | Means for obtaining |
| 614 | Means for obtaining |
| 615 | CPP |
| 616 | CPP |

## Claims

1. A method of MIMO mode selection in a network element of a mobile communication system, said mobile communication system further comprising a mobile station coupled to a base station, said base station adapted for transmission to a cell, the method comprising the steps of:
- obtaining (101) a channel estimation of said mobile station and calculating an estimated signal to interference plus noise ratio with said channel estimation of said mobile station;
- selecting (103) as MIMO mode candidates a first set of MIMO modes, if said estimated SINR is smaller than a first threshold;
- selecting (104) as MIMO mode candidates a second set of MIMO modes, if said estimated SINR is bigger than said first threshold;
- calculating (105) a cell load value of said cell of said base station adapted for transmission;
- obtaining (106) a corresponding weight factor of said load value for each MIMO mode of said MIMO mode candidates;
- obtaining (107) an expected mobile station throughput and calculating a weighted throughput by multiplying said weight factor of each MIMO mode by said expected mobile station throughput;
- selecting (108) said MIMO mode with a highest weighted throughput for communication between said mobile station and a base station;
wherein said mobile communication systems is a linear pre-coding system and is adapted for linear pre-coding for transmit antenna weights.

2. The method as in claim 1, wherein said expected mobile station throughput is a function of said signal to interference plus noise ratio, modulation and coding scheme of said mobile station.

3. The method as in claim 1, wherein said first set of MIMO modes are: Collaborative MIMO and Interference Coordination Mode.

4. The method as in claim 1, wherein said second set of MIMO modes are Single-user MIMO, Multiple-user MIMO and Interference Coordination Mode.

5. The method as in claim 1, wherein weight factor close to one corresponds to a small cell load value and it maximizes said throughput of said mobile station.

6. The method as in claim 1, wherein said base station communicates with said mobile station with a plurality of codebooks, wherein said codebooks are a set of complex weight vectors for transmission antennas of said base station.

7. The method as in claim 1, wherein said correspondence between said weight factor and said cell load values are stored in a look-up table in said network element, wherein said cell load value is a value of a plurality of base stations.

8. The method as in claim 1, wherein said weight factor using one divided by the amount of consumed resources maximizes the average cell throughput.

9. A network element (601) for a mobile communication system, being operable to perform in accordance with any one of the preceding claims.

10. A network element as in claim 9, wherein said network element is a base station (601).

11. A network element as in claim 9, wherein said network element is a mobile station (602).

12. A mobile communication system for MIMO mode selection, said mobile communication system being operable to perform in accordance with any one of the preceding claims 1 to 8.

13. A computer program product (615, 616) stored on a storage medium, comprising executable program means for causing a network element to perform a method according to any of the preceding claims 1 to 8 when said program is run on said network element.

## Amended claims

### Amended claims in accordance with Rule 137(2) EPC.

**1.** A method of MIMO mode selection in a network element of a mobile communication system, said mobile communication system further comprising a mobile station coupled to a base station, said base station adapted for transmission to a cell, the method comprising the steps of:
- obtaining (101) a channel estimation of said mobile station and calculating an estimated signal to interference plus noise ratio with said channel estimation of said mobile station;
- selecting (103) as MIMO mode candidates a first set of MIMO modes, if said estimated SINR is smaller than a threshold;
- selecting (104) as MIMO mode candidates a second set of MIMO modes, if said estimated SINR is bigger than said threshold;
- calculating (105) a cell load value of said cell of said base station adapted for transmission;
- obtaining (106) a corresponding weight factor of said cell load value for each MIMO mode of said selected MIMO mode candidates;
- obtaining (107) an expected mobile station throughput and calculating a weighted throughput by multiplying said weight factor of each MIMO mode by said expected mobile station throughput;
- selecting (108) said MIMO mode with a highest weighted throughput for communication between said mobile station and a base station;
wherein said mobile communication systems is a linear pre-coding system and is adapted for linear pre-coding for transmit antenna weights.

**2.** The method as in claim 1, wherein said expected mobile station throughput is a function of said signal to interference plus noise ratio, modulation and coding scheme of said mobile station.

**3.** The method as in claim 1, wherein said first set of MIMO modes are: Collaborative MIMO and Interference Coordination Mode.

**4.** The method as in claim 1, wherein said second set of MIMO modes are Single-user MIMO, Multiple-user MIMO and Interference Coordination Mode.

**5.** The method as in claim 1, wherein weight factor close to one corresponds to a small cell load value and it maximizes said throughput of said mobile station.

**6.** The method as in claim 1, wherein said base station communicates with said mobile station with a plurality of codebooks, wherein said codebooks are a set of complex weight vectors for transmission antennas of said base station.

**7.** The method as in claim 1, wherein said correspondence between said weight factor and said cell load values are stored in a look-up table in said network element, wherein said cell load value is a value of a plurality of base stations.

**8.** The method as in claim 1, wherein said weight factor using one divided by the amount of consumed resources maximizes the average cell throughput.

**9.** A network element (601) for a mobile communication system, being operable to perform in accordance with any one of the preceding claims.

**10.** A network element as in claim 9, wherein said network element is a base station (601).

**11.** A network element as in claim 9, wherein said network element is a mobile station (602).

**12.** A mobile communication system for MIMO mode selection, said mobile communication system being operable to perform in accordance with any one of the preceding claims 1 to 8.

**13.** A computer program product (615, 616) stored on a storage medium, comprising executable program means for causing a network element to perform a method according to any of the preceding claims 1 to 8 when said program is run on said network element.
